# EUROPÄISCHE PATENTSCHRIFT

(11) **EP 4 329 924 B1**
(45) Veröffentlichungstag und Bekanntmachung des Hinweises auf die Patenterteilung: **01.01.2025**
(21) Anmeldenummer: 22721727.0
(22) Anmeldetag: 08.04.2022
(51) Int. Cl.: B01D 63/02, H01M 8/04119

(54) **BEFEUCHTER**
HUMIDIFIER
HUMIDIFICATEUR

(30) Priorität: 28.04.2021 DE 102021204247
(43) Veröffentlichungstag der Anmeldung: 06.03.2024
(73) Patentinhaber: MAHLE International GmbH, 70376 Stuttgart (DE)
(72) Erfinder: BAUMANN, Michael, 72119 Ammerbuch (DE); KAISER, Sven Alexander, 71336 Waiblingen (DE)
(74) Vertreter: BRP Renaud & Partner mbB Rechtsanwälte Patentanwälte Steuerberater
(86) Internationale Anmeldenummer: PCT/EP2022/059419
(87) Internationale Veröffentlichungsnummer: WO 2022/228868

(56) Entgegenhaltungen:
- DE-A1- 102014 006 394
- DE-A1- 102019 123 534
- US-A1- 2015 162 627
- US-A1- 2016 079 616

## Beschreibung

Die Erfindung betrifft einen Befeuchter zum Befeuchten einer trockenen Kathoden-Zuluft mittels einer feuchten Kathoden-Abluft in einem Brennstoffzellensystem nach dem Oberbegriff des Anspruchs 1.

Ein Befeuchter in einem Brennstoffzellensystem wird zum Befeuchten einer trockenen Kathoden-Zuluft mittels einer feuchten Kathoden-Abluft eingesetzt. Das Brennstoffzellensystem kann insbesondere zum Antrieb von Fahrzeugen verwendet werden. Dabei umfasst ein gattungsgemäßer Befeuchter üblicherweise ein Gehäuse und einen Membranstapel, der in dem Gehäuse aufgenommen ist und mehrere beabstandet zueinander gestapelte Membranen aufweist. Zwischen den benachbarten Membranen des Membranstapels sind Kanäle gebildet, die alternierend durch die Kathoden-Zuluft und die Kathoden-Abluft durchströmt sind. Die Membranen sind dabei luftundurchlässig und wasserdampfdurchlässig, so dass die Kathoden-Zuluft und die Kathoden-Abluft durch die Membranen getrennt sind und dennoch die Kathoden-Zuluft durch die Membranen hindurch mit der Kathoden-Abluft befeuchtet werden kann. Aus DE 10 2014 006 394 A1 ist beispielweise bekannt, die Kathoden-Zuluft und die Kathoden-Abluft in dem Gehäuse des Befeuchters durch mehrere Dichtungen luftdicht zu trennen. Nachteiligerweise ist dadurch der Befeuchter sehr komplex aufgebaut. DE 10 2019 123534 offenbart einen Befeuchter für Brennstoffzellen mit einem quaderförmigen Flachmembranstapel und Dichtungsringen an den kurzen Seiten. Die Dichtungsringe können aus einem Elastomer oder einem Klebstoff geformt sein. DE 10 2014 006394 offenbart einen Befeuchter für Brennstoffzellen mit Flachmembranen und Dichtungen an den Kanten der Längsseiten. US 2015/162627 offenbart einen Befeuchter für Brennstoffzellen mit Endplatten. Die Membranen sind von Rahmenteilen umgeben und werden aufeinander gestapelt, so dass ein Membranstapel entsteht, der ins Gehäuse eingeschoben werden kann, wobei das Einschieben parallel zu den durchströmbaren Seiten erfolgt. Das Gehäuse hat Streben, in den Ecken, die dem Membranstapel halt geben. Diese könnte man als Tragrahmen erachten. Dieser ist jedoch nicht ins Gehäuse einsetzbar, sondern vielmehr sind die Streben bereits Teil des Gehäuses. Nach Einsetzen des Stapels erfolgt die Abdichtung an den Längskanten mittels einer härtenden Dichtmasse. Dabei muss die Dichtmasse an insgesamt vier Löchern in den Streben ("lateral supports") von außen eingeführt und anschließend gehärtet werden.

Die Aufgabe der Erfindung ist es daher, für einen Befeuchter der gattungsgemä-ßen Art eine verbesserte oder zumindest alternative Ausführungsform anzugeben, bei der die beschriebenen Nachteile überwunden werden.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Ein Befeuchter ist zum Befeuchten einer trockenen Kathoden-Zuluft mittels einer feuchten Kathoden-Abluft in einem Brennstoffzellensystem vorgesehen. Der Befeuchter weist ein Gehäuse mit einem Gehäuseinnenraum und einen in dem Gehäuseinnenraum angeordneten Membranstapel auf. Der Membranstapel weist dabei sechs Seitenflächen auf und ist in den Gehäuseinnenraum des Gehäuses in Längsrichtung einschiebbar. Zwei der einander gegenüberliegenden Seitenflächen des Membranstapels sind dabei luftdicht verschlossen. Zwei weitere der einander gegenüberliegenden Seitenflächen des Membranstapels sind in einem Zuluft-Strömungspfad von der trockenen Kathoden-Zuluft und zwei weitere der einander gegenüberliegenden Seitenflächen des Membranstapels sind in einem Abluft-Strömungspfad von der feuchten Kathoden-Abluft vermischungsfrei durchströmbar. Zwischen der jeweiligen durchströmbaren Seitenfläche des Membranstapels und dem Gehäuse ist jeweils eine Luftkammer zum Zuleiten oder Ableiten der Kathoden-Zuluft in dem Zuluft-Strömungspfad oder zum Zuleiten oder Ableiten der Kathoden-Abluft in dem Abluft-Strömungspfad zu/aus dem Membranstapel gebildet. Erfindungsgemäß sind zwei der durchströmbaren Seitenflächen des Membranstapels quer zur Längsrichtung ausgerichtet und in Längsrichtung durchströmbar und zwei andere der durchströmbaren Seitenflächen des Membranstapels sind parallel zur Längsrichtung ausgerichtet und quer zur Längsrichtung durchströmbar. Die nicht durchströmbaren Seitenflächen des Membranstapels sind dann entsprechend parallel zur Längsrichtung ausgerichtet.

Der Membranstapel weist mehrere Membranen auf, wobei die Membranen des Membranstapels aufgrund der erfindungsgemäßen Anordnung der durchströmbaren Seitenflächen des Membranstapels in dem Gehäuse quer zur Längsrichtung beabstandet zueinander gestapelt sind. Vorteilhafterweise können die Membranen als Flachmembrane ausgebildet sein. Vorteilhafterweise können die Membranen sehr dünn, vorzugsweise folienartig, ausgebildet sein. Zwischen den einzelnen Membranen sind dabei Zuluft-Kanäle und Abluft-Kanäle gebildet. Die Zuluft-Kanäle sind dem Zuluft-Strömungspfad zugeordnet und verbinden ein erstes Paar der durchströmbaren und einander gegenüberliegenden Seitenflächen des Membranstapels luftleitend miteinander. Die Abluft-Kanäle sind dem Abluft-Strömungspfad zugeordnet und verbinden ein zweites Paar der durchströmbaren und einander gegenüberliegenden Seitenflächen des Membranstapels luftleitend miteinander. Zweckgemäß sind die Zuluft-Kanäle von dem zweiten Paar der Seitenflächen und die Abluft-Kanäle von dem ersten Paar der Seitenflächen luftdicht getrennt. Zweckgemäß sind die beiden nicht durchströmbaren Seitenflächen des Membranstapels luftdicht verschlossen. Die Membranen des Membranstapels sind luftdicht und wasserdampfdurchlässig, so dass die Kathoden-Zuluft und die Kathoden-Abluft den Membranstapel vermischungsfrei durchströmen und die Kathoden-Zuluft über die Membranen hindurch mit der Kathoden-Abluft befeuchtet wird. Der Begriff "wasserdampfdurchlässig" bedeutet hier und weiter, dass die Membranen des Membranstapels für den Wasserdampf durchlässig sind und der Wasserdampf von der Kathoden-Abluft durch die Membranen hindurch zu der Kathoden-Zuluft durchtreten kann.

Die Längsrichtung des erfindungsgemäßen Befeuchters ist dabei durch die Richtung definiert, in die der Membranstapel in das Gehäuse eingeschoben ist. Der Membranstapel kann vorzugsweise quaderförmig sein und eine Längsachse des Membranstapels kann in Längsrichtung ausgerichtet sein. Vorteilhafterweise können längste Kanten des Membranstapels in Längsrichtung ausgerichtet sein. Die durchströmbaren und quer zur Längsrichtung ausgerichteten Seitenflächen und die durchströmbaren und parallel zur Längsrichtung ausgerichteten Seitenflächen können voneinander abweichende geometrische Flächen aufweisen. Der innerhalb des Membranstapels liegende Zuluft-Strömungspfad und der innerhalb des Membranstapels liegende Abluft-Strömungspfad können voneinander abweichende Längen aufweisen.

Das Gehäuse kann dabei einen einseitig offenen bzw. topfförmigen bzw. eimerförmigen Gehäusekörper mit einem Boden und einem Schließdeckel aufweisen. Der Gehäusekörper bzw. die Längsmittelachse des Gehäusekörpers ist dann in Längsrichtung ausgerichtet und der Boden und der Schließdeckel sind quer zur Längsrichtung ausgerichtet. Die durchströmbaren und quer zur Längsrichtung ausgerichteten Seitenflächen sind dann jeweils zu dem Boden und zu dem Schließdeckel zugewandt angeordnet. Das Gehäuse kann alternativ einen beidseitig offenen bzw. rohrförmigen Gehäusekörper mit zwei Schließdeckeln aufweisen. Der Gehäusekörper bzw. die Längsmittelachse des Gehäusekörpers ist dann in Längsrichtung und die jeweiligen Schließdeckel sind quer zur Längsrichtung ausgerichtet. Die durchströmbaren und quer zur Längsrichtung ausgerichteten Seitenflächen sind dann jeweils zu dem jeweiligen Schließdeckel zugewandt angeordnet. Der Querschnitt des rohrförmigen oder topfförmigen Gehäusekörpers quer zur Längsrichtung kann dabei rund oder oval oder vieleckig oder rhombisch oder rechteckig oder quadratisch sein.

In dem erfindungsgemäßen Befeuchter kann das Abdichten der Luftkammern, die den durchströmbaren und quer zur Längsrichtung ausgerichteten Seitenflächen des Membranstapels zugeordnet sind, vorteilhafterweise quer zur Längsrichtung und dadurch vereinfacht erfolgen. Insbesondere kann von herkömmlichen in Längsrichtung ausgerichteten Dichtfenstern in dem Gehäuse abgesehen werden. Dadurch kann die Anzahl der Hinterschnitte in dem Gehäuse und demnach auch die Anzahl der Schieber bei der Herstellung des Gehäuses reduziert werden. Durch die erfindungsgemäße Anordnung der durchströmbaren Seitenflächen des Membranstapels in dem Gehäuse kann also der Aufbau des Befeuchters insgesamt vereinfacht werden und die Herstellungskosten reduziert werden.

Vorteilhafterweise kann vorgesehen sein, dass der Membranstapel quaderförmig ist. Eine Längsachse des Membranstapels und längste Kanten des Membranstapels sind dann parallel zur Längsrichtung ausgerichtet. Die Membranen des Membranstapels sind aufgrund der erfindungsgemäßen Anordnung der durchströmbaren Seitenflächen des Membranstapels in dem Gehäuse quer zur Längsrichtung beabstandet zueinander gestapelt. Sind die längsten Kanten des Membranblocks entlang der Längsrichtung ausgerichtet, so sind die Membranen entlang der kurzen quer zur Längsrichtung ausgerichteten Kante des Membranstapels gestapelt. Im Vergleich zu einem herkömmlichen Membranstapel, in dem die Membranen in Längsrichtung und dadurch entlang der längsten Kante des Membranstapels gestapelt sind, kann die Anzahl der zu stapelnden Membranen bzw. der zu stapelnden Lagen reduziert werden. Dadurch können der Aufbau des Membranstapels vereinfacht und zudem die Zykluszeit bei der Herstellung des Membranstapels vorteilhafterweise linear verkürzt werden. Dementsprechend können die Herstellungskosten des Membranstapels und insgesamt des Befeuchters reduziert werden.

Vorteilhafterweise können die durchströmbaren und quer zur Längsrichtung ausgerichteten Seitenflächen dem Zuluft-Strömungspfad zugeordnet sein. Der Zuluft-Strömungspfad ist dann in Längsrichtung ausgerichtet und von Kathoden-Zuluft in Längsrichtung durchströmbar. Dementsprechend können die durchströmbaren und parallel zur Längsrichtung ausgerichteten Seitenflächen dem Abluft-Strömungspfad zugeordnet sein. Der Abluft-Strömungspfad ist dann quer zur Längsrichtung ausgerichtet und von Kathoden-Abluft quer zur Längsrichtung durchströmbar. Die feuchte Kathoden-Abluft in dem Abluft-Strömungspfad tendiert aufgrund der Kondensation von Wasser zu einem höheren Druckverlust als die trockene Kathoden-Zuluft in dem Zuluft-Strömungspfad. Ist der Membranstapel quaderförmig und sind die längsten Kanten des Membranstapels in Längsrichtung ausgerichtet, so kann eine besonders vorteilhafte Durchströmung des Membranstapels erzielt werden.

In dem derart ausgerichteten Membranstapel haben die durchströmbaren und parallel zur Längsrichtung ausgerichteten Seitenflächen eine größere geometrische Fläche als die durchströmbaren und quer zur Längsrichtung ausgerichteten Seitenflächen. Zudem ist der innerhalb des Membranstapels liegende Strömungspfad zwischen den durchströmbaren und parallel zur Längsrichtung ausgerichteten Seitenflächen kleiner als der innerhalb des Membranstapels liegende Strömungspfad zwischen den durchströmbaren und quer zur Längsrichtung ausgerichteten Seitenflächen. Die durchströmbaren und parallel zur Längsrichtung ausgerichteten Seitenflächen mit einer größeren geometrischen Fläche und einem kleineren Strömungspfad innerhalb des Membranstapels sind demnach dem Abluft-Strömungspfad zugeordnet. Dadurch kann der Druckverlust in der nassen und zum Druckverlust tendierenden Kathoden-Abluft reduziert werden. Die durchströmbaren und quer zur Längsrichtung ausgerichteten Seitenflächen mit einer kleineren geometrischen Fläche und einem größeren Strömungspfad innerhalb des Membranstapels sind dem Zuluft-Strömungspfad zugeordnet. Da die trockene Kathoden-Zuluft zu keinem Druckverlust tendiert, sind die kleinere geometrische Fläche und der größere Strömungspfad innerhalb des Membranstapels unkritisch.

Bei einer vorteilhaften Ausführungsform des Befeuchters ist vorgesehen, dass der Befeuchter einen Tragrahmen aufweist. Der Membranstapel ist dabei in dem Tragrahmen und der Tragrahmen ist in dem Gehäuse eingesetzt. Die durchströmbaren Seitenflächen des Membranstapels sind dabei durch den Tragrahmen hindurch mit den zugeordneten Luftkammern luftleitend verbunden. Der Tragrahmen nimmt den Membranstapel sicher auf und legt den Membranstapel in dem Gehäuse sicher fest. Dadurch kann die Montage des Befeuchters deutlich vereinfacht werden. Zudem kann das Abdichten des Membranstapels zu dem Gehäuse über den Tragrahmen und dadurch vereinfacht erfolgen. Vorteilhafterweise kann der Tragrahmen auch die Toleranzen des Membranstapels und des Gehäuses ausgleichen. Der Tragrahmen ist ein separates Element und kann vorteilhafterweise aus Kunststoff geformt sein. Der Tragrahmen kann vorteilhafterweise formstabil sein. Der Tragrahmen kann vorteilhafterweise selbstragend sein. Der Tragrahmen kann einteilig oder mehrteilig sein.

Vorteilhafterweise kann der Befeuchter zwei einander gegenüberliegende Dichtplatten aufweisen, wobei die Dichtplatten an den nicht durchströmbaren Seitenflächen des Membranstapels anliegen. Die jeweilige Dichtplatte kann dabei in Form und Größe der jeweiligen nicht durchströmbaren Seitenfläche entsprechen. Die nicht durchströmbaren Seitenflächen des Membranstapels sind dabei in dem Gehäuse parallel zur Längsrichtung ausgerichtet. Die jeweilige Dichtplatte kann mit der zugeordneten Seitenfläche des Membranstapels zusätzlich stoffschlüssig und luftdicht verbunden - beispielweise verklebt - sein. Vorteilhafterweise können die jeweiligen Dichtplatten an dem oben beschriebenen Tragrahmen ausgeformt sein.

Zusätzlich kann vorgesehen sein, dass die jeweilige Dichtplatte an dem Gehäuse dichtend anliegt. Die jeweilige Dichtplatte kann dabei derart ausgebildet sein, dass sie im Betrieb des Befeuchters durch den inneren Betriebsdruck in dem Membranstapel verformbar und an das Gehäuse dichtend anpressbar ist. Alternativ oder zusätzlich kann die jeweilige Dichtplatte verformbar ausgebildet sein, so dass beim Vorliegen des inneren Betriebsdrucks in dem Membranstapel die jeweilige Dichtplatte an das Gehäuse dichtend angepresst ist. Dadurch sind die Luftkammern, die den beiden durchströmbaren und parallel zur Längsrichtung ausgerichteten Seitenflächen zugeordnet sind, quer zur Umlaufrichtung luftdicht voneinander getrennt. Die Umlaufrichtung läuft dabei um die Längsrichtung um.

In dem Gehäuse wechseln sich die den durchströmbaren Seitenflächen zugeordneten Luftkammern und die den nicht durchströmbaren Seitenflächen zugeordneten Dichtplatten in Umlaufrichtung ab. Die Dichtplatten sind dabei mit dem Membranstapel und mit dem Gehäuse luftdicht verbunden, so dass die beiden Luftkammern, die den beiden durchströmbaren und parallel zur Längsrichtung ausgerichteten Seitenflächen zugeordnet sind, durch die Dichtplatten luftdicht voneinander getrennt sind.

Alternativ dazu kann vorgesehen sein, dass auf der jeweiligen Dichtplatte wenigstens eine in Längsrichtung ausgerichtete Dichtrippe ausgebildet ist und die jeweilige Dichtrippe an dem Gehäuse dichtend anliegt. Die Luftkammern, die den beiden durchströmbaren und parallel zur Längsrichtung ausgerichteten Seitenflächen zugeordnet sind, sind dadurch quer zur Umlaufrichtung luftdicht voneinander getrennt. Die Umlaufrichtung läuft dabei um die Längsrichtung um. Wie oben bereits erläutert, wechseln sich die den durchströmbaren Seitenflächen zugeordneten Luftkammern und die den nicht durchströmbaren Seitenflächen zugeordneten Dichtplatten in Umlaufrichtung in dem Gehäuse ab. Die Dichtplatten sind dabei mit dem Membranstapel luftdicht verbunden und die Dichtrippe liegt an dem Gehäuse dichtend an, so dass die beiden Luftkammern, die den beiden durchströmbaren und parallel zur Längsrichtung ausgerichteten Seitenflächen zugeordnet sind, durch die Dichtrippe luftdicht voneinander getrennt sind.

Vorteilhafterweise können die jeweilige Dichtplatte oder die jeweilige Dichtrippe auf der Dichtplatte derart ausgebildet sein, dass die jeweilige Dichtplatte im Betrieb des Befeuchters durch den inneren Betriebsdruck in dem Membranstapel verformbar ist und die jeweilige Dichtplatte oder die jeweilige Dichtrippe an das Gehäuse dichtend anpressbar ist. Der Membranstapel weist mehrere Membranen auf, wobei die Membranen flexibel sind und sich bei einem auf sie wirkenden Druck verformen können. Im Betrieb des Membranstapels ist der innere Betriebsdruck höher als der Außendruck und der Membranstapel bläht sich nach außen auf. Es versteht sich jedoch, dass die hier beschriebene Formänderung des Membranstapels gering ist und keine Änderung der Funktion und der Struktur des Membranstapels und des Befeuchters hervorruft. Durch die beschriebene Formänderung ist die jeweilige Dichtplatte oder die jeweilige Dichtrippe auf der Dichtplatte an das Gehäuse angepresst und die beiden Luftkammern, die den beiden durchströmbaren und parallel zur Längsrichtung ausgerichteten Seitenflächen zugeordnet sind, sind voneinander sicher luftdicht getrennt. Zusätzlich kann zwischen der Dichtplatte oder der Dichtrippe auf der Dichtplatte und dem Gehäuse eine elastische Dichtung angeordnet - beispielweise eingeklemmt und/oder verpresst - sein. Die Dichtung kann beispielweise aus einer gehärteten Klebstoffmasse gebildet sein.

Vorteilhafterweise kann vorgesehen sein, dass der Befeuchter zwei elastische Ringdichtungen aufweist. Die jeweilige Ringdichtung umläuft dabei die jeweilige durchströmbare und quer zur Längsrichtung ausgerichtete Seitenfläche des Membranstapels randseitig und ist zwischen dem Gehäuse und dem Tragrahmen oder zwischen dem Gehäuse und der jeweiligen durchströmbaren und quer zur Längsrichtung ausgerichteten Seitenfläche dichtend angeordnet - beispielweise eingeklemmt und/oder verpresst. Dadurch dichtet die jeweilige Ringdichtung die dieser Seitenfläche zugeordnete Luftkammer von den benachbarten Luftkammern ab. Die jeweilige Ringdichtung kann vorteilhafterweise aus einer gehärteten Klebstoffmasse gebildet sein.

Vorteilhafterweise kann das Abdichten des Membranstapels zu dem Gehäuse besonders vereinfacht nur mittels der beiden Ringdichtungen und der beiden Dichtplatten - mit oder ohne die Dichtrippen - erfolgen. Dabei trennen die Dichtplatten oder die Dichtrippen auf den Dichtplatten die beiden Luftkammern, die den beiden durchströmbaren und parallel zur Längsrichtung ausgerichteten Seitenflächen zugeordnet sind, luftdicht voneinander. Die beiden Ringdichtungen trennen dann die beiden Luftkammern, die den beiden durchströmbaren und quer zur Längsrichtung ausgerichteten Seitenflächen zugeordnet sind, luftdicht von den Luftkammern, die den beiden durchströmbaren und parallel zur Längsrichtung ausgerichteten Seitenflächen zugeordnet sind. Dadurch sind insgesamt ein sicheres Abdichten des Membranstapels zu dem Gehäuse hin ermöglicht und die Komplexität des Befeuchters und die Anzahl der Einzelteile deutlich reduziert.

Bei einer vorteilhaften Ausführungsform des Befeuchters ist vorgesehen, dass das Gehäuse einen quer zur Längsrichtung beidseitig offenen Gehäusekörper und zwei Schließdeckel aufweist. Der Gehäusekörper ist demnach rohrförmig, wobei sein Querschnitt quer zur Längsrichtung rund oder oval oder vieleckig oder rhombisch oder rechteckig oder quadratisch sein kann. Der Gehäusekörper ist dann mittels der Schließdeckel jeweils axial längsendseitig luftdicht verschlossen. Vorteilhafterweise können der Gehäusekörper und der jeweilige Schließdeckel miteinander verschraubt sein. Alternativ kann das Gehäuse einen quer zur Längsrichtung einseitig offenen Gehäusekörper und einen Schließdeckel aufweisen. Der Gehäusekörper ist demnach topfförmig bzw. eimerförmig, wobei sein Querschnitt quer zur Längsrichtung rund oder oval oder vieleckig oder rhombisch oder rechteckig oder quadratisch sein kann. Der Gehäusekörper ist mittels des Schließdeckels axial längsendseitig luftdicht verschlossen. Vorteilhafterweise können der Gehäusekörper und der Schließdeckel miteinander verschraubt sein.

Vorteilhafterweise kann der Befeuchter für den jeweiligen Schließdeckel eine elastische Umlaufdichtung aufweisen, wobei die Umlaufdichtung zwischen dem Gehäusekörper und dem jeweiligen Schließdeckel dichtend angeordnet - beispielweise eingeklemmt und/oder verpresst - ist. Die Umlaufdichtung kann beispielweise aus einer gehärteten Klebstoffmasse gebildet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Explosionsansicht eines erfindungsgemäßen Befeuchters in einer ersten Ausführungsform;
- Fig. 2: eine Ansicht des erfindungsgemäßen Befeuchters in der ersten Ausführungsform;
- Fig. 3 bis 5: Schnittansichten des erfindungsgemäßen Befeuchters in der ersten Ausführungsform in drei abweichenden zueinander senkrechten Ebenen;
- Fig. 6: eine Ansicht einer Anordnung aus einem Membranstapel und einem Tragrahmen des erfindungsgemäßen Befeuchters in der ersten Ausführungsform;
- Fig. 7: eine Ansicht des erfindungsgemäßen Befeuchters in einer zweiten Ausführungsform;
- Fig. 8 und 9: Schnittansichten des erfindungsgemäßen Befeuchters in der zweiten Ausführungsform in zwei abweichenden zueinander senkrechten Ebenen;
- Fig. 10: eine Ansicht eines Gehäusekörpers des erfindungsgemäßen Befeuchters in der zweiten Ausführungsform;
- Fig. 11: eine Ansicht des Gehäusekörpers aus Fig. 10 mit der Anordnung aus dem Membranstapel und dem Tragrahmen;
- Fig. 12: eine Ansicht einer Anordnung aus dem Membranstapel und dem abweichend ausgebildeten Tragrahmen des erfindungsgemäßen Befeuchters.

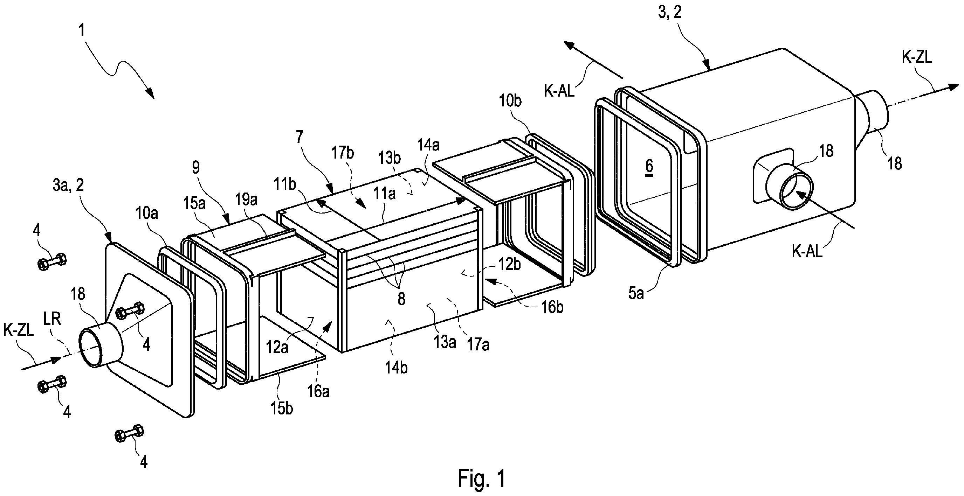

Fig. 1 zeigt eine Explosionsansicht eines erfindungsgemäßen Befeuchters 1 in einer ersten Ausführungsform. Der Befeuchter 1 ist dabei zum Befeuchten einer trockenen Kathoden-Zuluft K-ZL mittels einer feuchten Kathoden-Abluft K-AL in einem Brennstoffzellensystem - hier nicht gezeigt - vorgesehen. Der Befeuchter 1 umfasst dabei ein Gehäuse 2, das bei der ersten Ausführungsform des Befeuchters 1 aus einem einseitig offenen bzw. topfförmigen bzw. eimerförmigen Gehäusekörper 3 und einem Schließdeckel 3a gebildet ist. Der topfförmige bzw. eimerförmige Gehäusekörper 3 und der Schließdeckel 3a sind miteinander mittels mehrerer Schrauben 4 verschraubt. Zwischen dem Gehäusekörper 3 und dem Schließdeckel 3a ist zudem eine elastische Umlaufdichtung 5a - beispielweise aus einer gehärteten Klebstoffmasse - eingeklemmt bzw. verpresst. In dem Gehäuse 2 ist ein Gehäuseinnenraum 6 geformt.

Der Befeuchter 1 weist zudem einen Membranstapel 7 aus mehreren Membranen 8 - zur Übersichtlichkeit sind hier und weiter nur einzelne Membranen 8 in den Membranstapel 7 eingezeichnet - auf, wobei der Membranstapel 7 in einem zweiteiligen Tragrahmen 9 und der Tragrahmen 9 in dem Gehäuseinnenraum 6 des Gehäuses 2 eingesetzt ist. Der zweiteilige Tragrahmen 9 kann dabei entlang einer Verbindungslinie der beiden Teile eine Verzahnung aufweisen, um eine sichere formschlüssige Verbindung der beiden Teile des Tragrahmens 9 miteinander zu ermöglichen. Denkbar ist es aber auch, dass die beiden Teile des Tragrahmens 9 auf eine abweichende Weise miteinander festverbunden sind. Zwischen dem Tragrahmen 9 und dem Gehäuse 2 sind elastischer Ringdichtungen 10a und 10b - beispielweise aus einer gehärteten Klebstoffmasse - dichtend angeordnet. Der Membranstapel 7 ist in Längsrichtung LR in das Gehäuse 2 einschiebbar. Der topfförmige Gehäusekörper 3 ist dazu in Längsrichtung LR ausgerichtet und der Schließdeckel 3a verschließt den Gehäusekörper 3 quer zur Längsrichtung LR. Der Membranstapel 7 ist hier quaderförmig, wobei eine Längsachse des Membranstapels 7 und längste Kanten des Membranstapels 7 in Längsrichtung LR ausgerichtet sind. Der Membranstapel 7 weist dabei sechs paarweise einander gegenüberliegende Seitenflächen 11a und 11b, 12a und 12b, 13a und 13b auf.

Die Membranen 8 sind als folienartige Flachmembranen ausgebildet und in dem Membranstapel 7 quer zur Längsrichtung LR beabstandet zueinander gestapelt. Zwischen den Membranen 8 sind dabei Zuluft-Kanäle und Abluft-Kanäle gebildet.

Die Zuluft-Kanäle sind einem Zuluft-Strömungspfad 11a zugeordnet und verbinden die einander gegenüberliegenden und quer zur Längsrichtung LR ausgerichteten Seitenflächen 12a und 12b des Membranstapels 7 luftleitend miteinander. Die Abluft-Kanäle sind einem Abluft-Strömungspfad 11b zugeordnet und verbinden die einander gegenüberliegenden und parallel zur Längsrichtung LR ausgerichteten Seitenflächen 13a und 13b des Membranstapels 7 luftleitend miteinander. Die Zuluft-Kanäle des Zuluft-Strömungspfad 11a sind dabei von den Seitenflächen 13a und 13b und die Abluft-Kanäle des Abluft-Strömungspfad 11b sind von den Seitenflächen 12a und 12b luftdicht getrennt. Die einander gegenüberliegenden und parallel zur Längsachse ausgerichteten Seitenflächen 14a und 14b des Membranstapels 7 sind von Dichtplatten 15a und 15b des Tragrahmens 9 luftdicht geschlossen. Die Membranen 8 sind dabei luftdicht und wasserdampfdurchlässig, so dass die Kathoden-Zuluft K-ZL und die Kathoden-Abluft K-AL den Membranstapel 7 vermischungsfrei durchströmen und die Kathoden-Zuluft K-ZL über die Membranen 8 hindurch mit der Kathoden-Abluft K-AL befeuchtet wird.

Die feuchte Kathoden-Abluft K-AL in dem Abluft-Strömungspfad 11b tendiert aufgrund der Kondensation von Wasser zu einem höheren Druckverlust als die trockene Kathoden-Zuluft K-ZL in dem Zuluft-Strömungspfad 11a. In dem Befeuchter 1 ist der Zuluft-Strömungspfad 11a in Längsrichtung LR ausgerichtet und von Kathoden-Zuluft K-ZL in Längsrichtung LR durchströmbar. Der Abluft-Strömungspfad 11b ist quer zur Längsrichtung LR ausgerichtet und von Kathoden-Abluft K-AL quer zur Längsrichtung LR durchströmbar. Die durchströmbaren Seitenflächen 13a und 13b weisen eine größere geometrische Fläche als die durchströmbaren Seitenflächen 12a und 12b auf. Zudem ist der Abluft-Strömungspfad 11b innerhalb des Membranstapels 7 kürzer als der Zuluft-Strömungspfad 11a innerhalb des Membranstapels 7. Dadurch kann der Druckverlust in der nassen und zum Druckverlust tendierenden Kathoden-Abluft K-AL reduziert werden. Da die trockene Kathoden-Zuluft zu keinem Druckverlust tendiert, sind die kleinere geometrische Fläche der durchströmbaren Seitenflächen 12a und 12b und der grö-ßere Zuluft-Strömungspfad 11a innerhalb des Membranstapels 7 unkritisch.

Zwischen der jeweiligen durchströmbaren Seitenfläche 12a bzw. 12b und dem Gehäuse 2 ist jeweils eine Luftkammer 16a bzw. 16b zum Zuleiten bzw. Ableiten der Kathoden-Zuluft K-ZL gebildet. Zwischen der jeweiligen durchströmbaren Seitenfläche 13a bzw. 13b und dem Gehäuse 2 ist jeweils eine Luftkammer 17a bzw. 17b zum Zuleiten bzw. Ableiten der Kathoden-Abluft K-AL gebildet. In dem Gehäuse 2 sind zudem vier Luftstutzen 18 ausgeformt, die in die jeweiligen Luftkammern 16a und 16b, 17a und 17b führen. Über die Luftstutzen 18 können die Kathoden-Zuluft K-ZL und die Kathoden-Abluft K-AL in die oder aus den Luftkammern 16a und 16b, 17a und 17b strömen. Die jeweiligen Luftkammern 17a und 17b sind voneinander durch Dichtrippen 19a und 19b, die auf den Dichtplatten 15a und 15b ausgeformt und in Längsrichtung LR ausgerichtet sind, abgedichtet. Die Luftkammern 16a und 16b sind von den benachbarten Luftkammern 17a und 17b durch die Ringdichtungen 10a und 10b abgedichtet. Das Abdichten der Luftkammern 16a und 16b, 17a und 17b voneinander ist also besonders einfach. Insbesondere kann von herkömmlichen Dichtfenstern in dem Gehäuse 2 verzichtet und die Anzahl der Hinterschnitte und der bei der Herstellung des Gehäuses notwendiger Schieber reduziert werden.

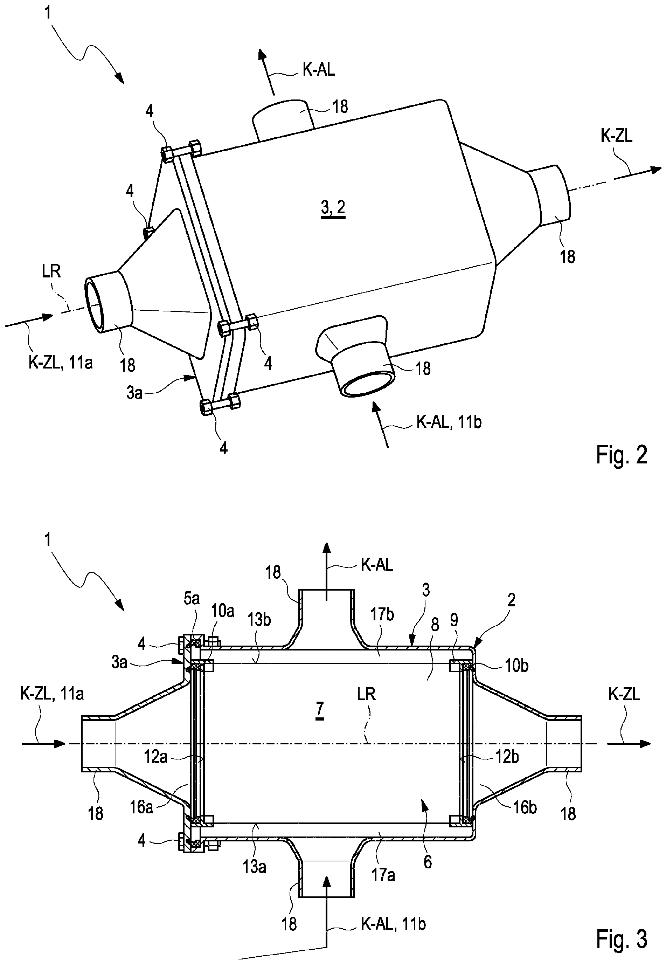

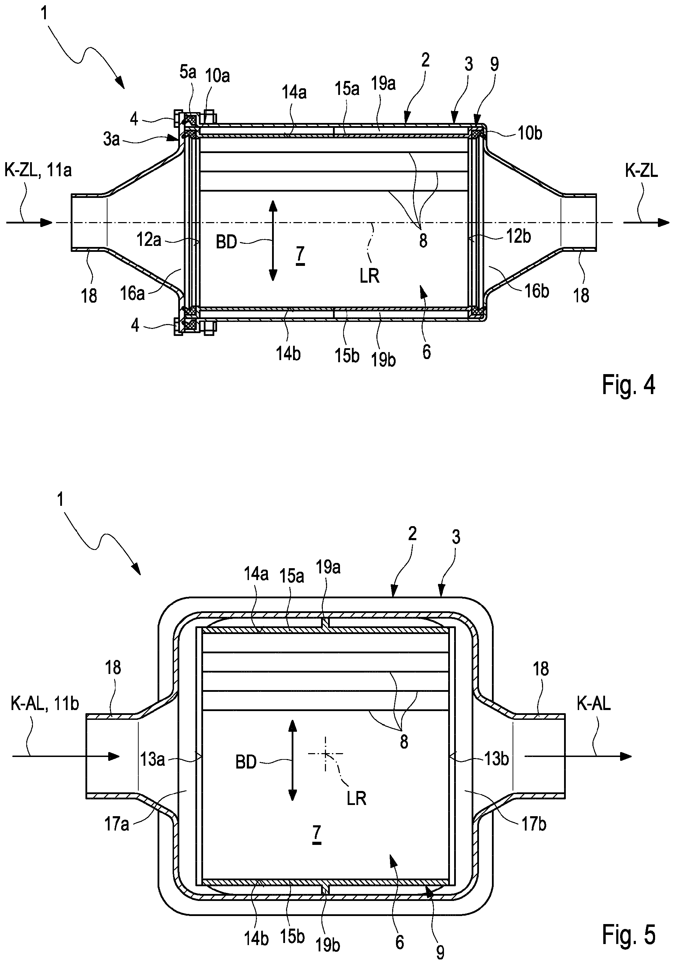

Fig. 2 zeigt eine Ansicht des Befeuchters 1 in der ersten Ausführungsform. Fig. 3 zeigt eine Schnittansicht des Befeuchters 1 in der ersten Ausführungsform in einer Ebene, die parallel zu einzelnen Membranen 8 und parallel zur Längsrichtung LR ausgerichtet ist. Fig. 4 zeigt eine Schnittansicht des Befeuchters 1 in der ersten Ausführungsform in einer Ebene, die quer zu einzelnen Membranen 8 und parallel zur Längsrichtung LR ausgerichtet ist. Fig. 5 zeigt eine Schnittansicht des Befeuchters 1 in der ersten Ausführungsform in einer Ebene, die quer zur Längsrichtung LR ausgerichtet ist.

Bezugnehmend auf Fig. 2 und Fig. 3 ist der topförmige Gehäusekörper 3 mit dem Schließdeckel 3a mittels der Schrauben 4 verschraubt. Bezugnehmend auf Fig. 3 ist dabei die Umlaufdichtung 5a zwischen dem Gehäusekörper 3 und dem Schließdeckel 3a eingeklemmt, so dass der Gehäusekörper 3 nach außen luftdicht geschlossen ist. Zudem sind die beiden Ringdichtungen 10a und 10b zwischen dem Tragrahmen 9 und dem Gehäuse 2 dichtend eingeklemmt. Dabei ist hier die Ringdichtung 10a zwischen dem Tragrahmen und dem Schließdeckel 3a und die Ringdichtung 10b zwischen dem Tragrahmen 9 und dem Gehäuseköper bzw. einem Boden des Gehäusekörpers 3 dichtend eingeklemmt. Durch die Ringdichtungen 10a und 10b sind die Luftkammern 16a und 16b von den benachbarten Luftkammern 17a und 17b luftdicht getrennt.

Bezugnehmend auf Fig. 4 und Fig. 5 liegen die Dichtrippen 19a und 19b luftdicht an dem Gehäuse 2 bzw. an dem Gehäusekörper 3 an und trennen die Luftkammern 17a und 17b luftdicht voneinander. Die Dichtwirkung wird dabei dadurch verstärkt, dass die Dichtrippen 19a und 19b im Betrieb des Befeuchters 1 durch den inneren Betriebsdruck BD - wie mit Pfeilen angedeutet - in dem Membranstapel 7 an das Gehäuse 2 bzw. an den Gehäusekörper 3 dichtend angepresst sind. Im Betrieb des Befeuchters 1 verformen sich die flexiblen Membranen 8 bei einem auf sie wirkenden Druck und der Membranstapel 7 bläht sich nach außen auf. Dadurch sind die Dichtrippen 19a und 19b an das Gehäuse 2 bzw. an den Gehäusekörper 3 angepresst und die Dichtwirkung ist verstärk. Es versteht sich, dass die hier beschriebe Formänderung des Membranstapels 7 gering ist und keine Änderung der Funktion und der Struktur des Membranstapels 7 und/oder des Befeuchters 1 hervorruft.

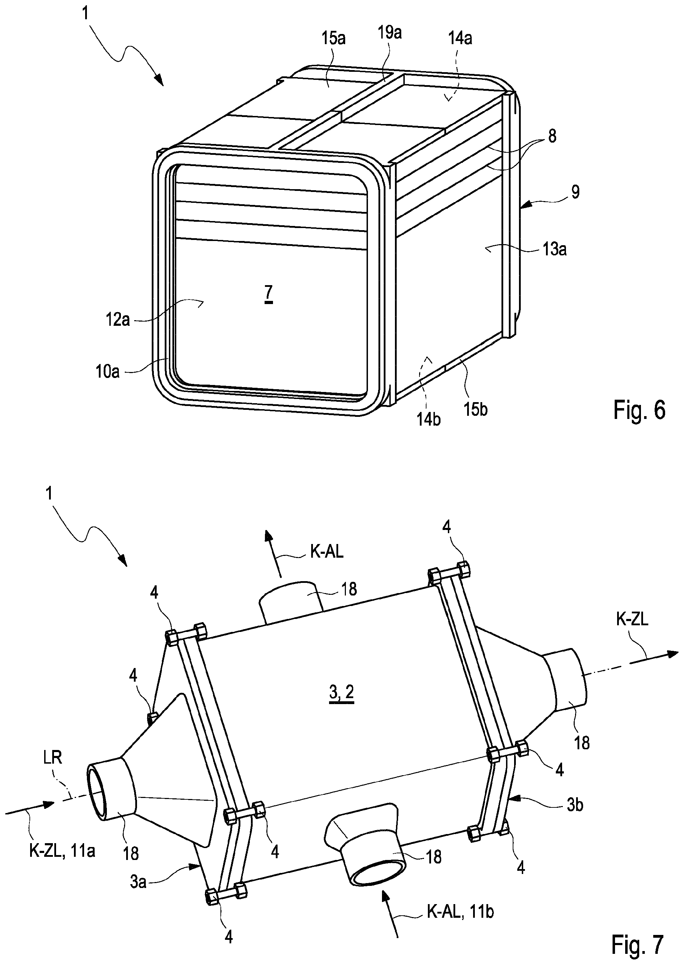

Fig. 6 zeigt eine Ansicht des Membranstapels 7, der in den Tragrahmen 9 des Befeuchters 1 in der ersten Ausführungsform eingesetzt ist. In Fig. 6 ist besonders gut erkennbar, dass die durchströmbaren Seitenflächen 12a und auch 12b, 13a und auch 13b durch den Tragrahmen 9 hindurch durchströmbar bleiben. Die nicht durchströmbaren Seitenflächen 14a und 14b sind durch die Dichtplatten 15a und 15b luftdicht geschlossen. Die jeweiligen Ringdichtungen 10a und 10b laufen dabei die jeweilige zugeordnete Seitenfläche 12a und auch 12b randseitig ab.

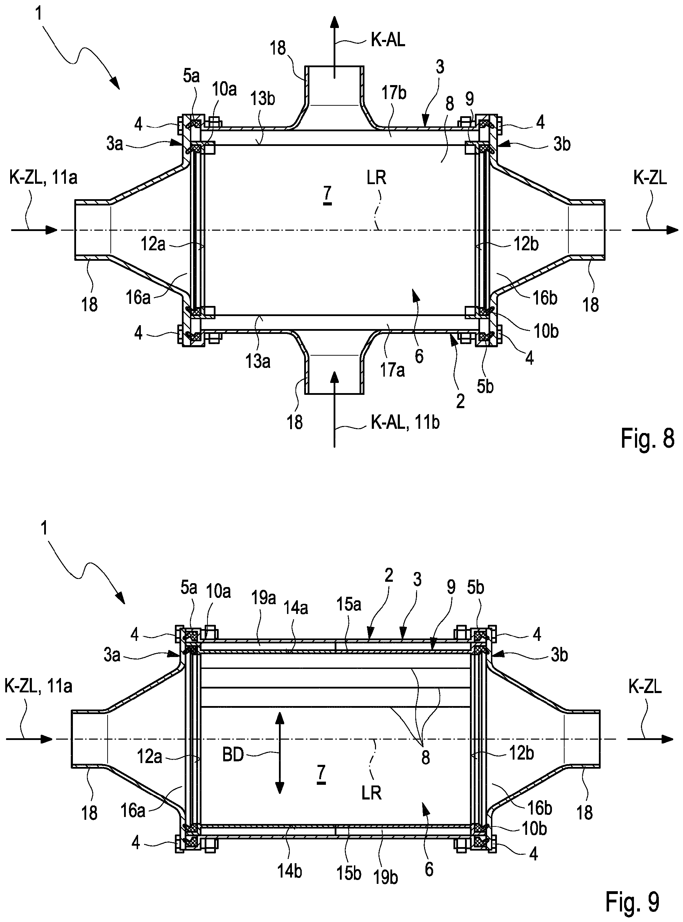

Fig. 7 zeigt eine Ansicht des erfindungsgemäßen Befeuchters 1 in einer zweiten Ausführungsform. Fig. 8 zeigt eine Schnittansicht des Befeuchters 1 in der zweiten Ausführungsform in einer Ebene, die parallel zu einzelnen Membranen 8 und parallel zur Längsrichtung LR ausgerichtet ist. Fig. 9 zeigt eine Schnittansicht des Befeuchters 1 in der zweiten Ausführungsform in einer Ebene, die quer zu einzelnen Membranen 8 und parallel zur Längsrichtung LR ausgerichtet ist.

Abweichend zu der ersten Ausführungsform des Befeuchters 1 weist der Befeuchter 1 in der zweiten Ausführungsform das abweichend ausgebildete Gehäuse 2 auf. In der zweiten Ausführungsform des Befeuchters 1 weist das Gehäuse 2 den beidseitig offenen bzw. rohrförmigen Gehäusekörper 3 auf. Der Gehäusekörper 3 ist einseitig - wie bei der ersten Ausführungsform bereits erläutert - mittels des Schließdeckels 3a und der Umlaufdichtung 5a luftdicht geschlossen. Analog dazu ist der Gehäusekörper 3 andersseitig mittels eines Schließdeckels 3b und einer Umlaufdichtung 5b luftdicht geschlossen. Die Schließdeckel 3a und 3b sind mit dem Gehäusekörper 3 mittels der Schrauben 4 verschraubt, wobei die Umlaufdichtungen 5a und 5b zwischen dem Schließdeckel 3a und 3b und dem Gehäusekörper 3 dichtend eingeklemmt sind. Im Übrigen stimmen die Befeuchter 1 in der ersten Ausführungsform und in der zweiten Ausführungsform überein. Aus diesem Grund wird auf weitere Erläuterungen zu der zweiten Ausführungsform verzichtet und der Bezug auf die obigen Ausführungen zu Fig. 1-6 genommen.

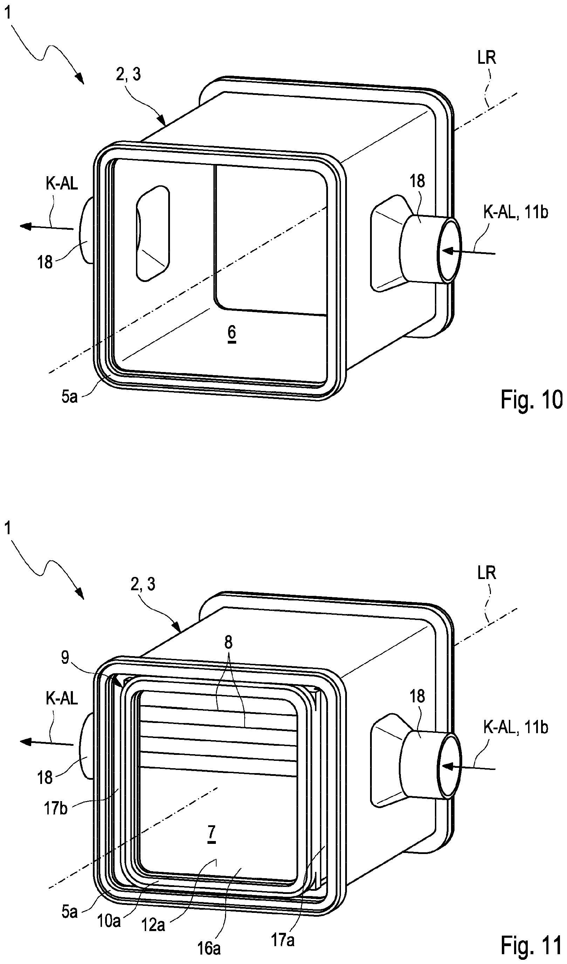

Fig. 10 zeigt eine Ansicht des Gehäusekörpers 3 des erfindungsgemäßen Befeuchters 1 in der zweiten Ausführungsform. Hier sind bereits die Umlaufdichtungen 5a und 5b in vorgesehene Nuten des Gehäusekörpers 3 montiert. Fig. 11 zeigt eine Ansicht des Gehäusekörpers 3 aus Fig. 10 mit dem Membranstapel 7 und dem Tragrahmen 9. Hier ist bereits der Membranstapel 7 in den Tragrahmen 9 eingesetzt und die Ringdichtungen 10a und 10b in vorgesehene Nuten des Tragrahmens 9 montiert. Der Tragkörper 9 mit dem eingesetzten Membranstapel 7 ist dabei in dem Gehäusekörper 3 eingesetzt.

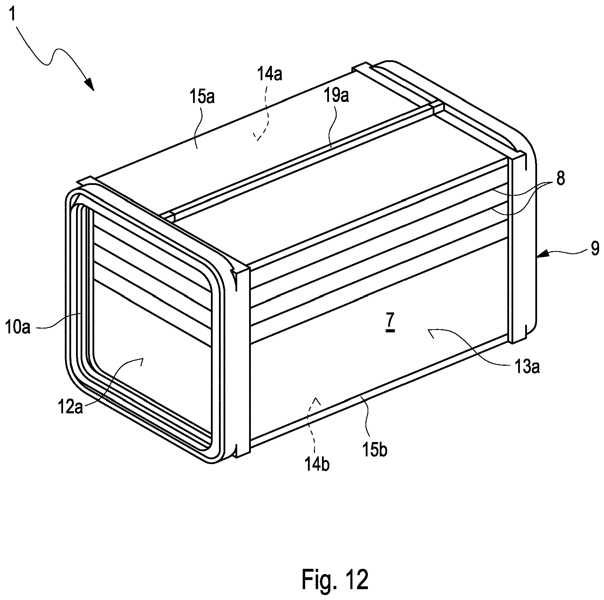

Fig. 12 zeigt eine Ansicht einer Anordnung aus dem Membranstapel 7 und dem abweichend ausgebildeten Tragrahmen 9 des erfindungsgemäßen Befeuchters 1. Der Tragrahmen 9 ist hier vierteilig ausgebildet. Dabei ist der Tragrahmen 9 zwei die Seitenflächen 12a und 12b umlaufende Rahmen und die beiden Dichtplatten 15a und 15b aufgeteilt. Die einzelnen Teile des vierteiligen Tragrahmens 9 können miteinander beispielweise durch eine Verzahnung formschlüssig fest verbunden sein. Denkbar ist es aber auch, dass die beiden Teile des Tragrahmens 7 auf eine abweichende Weise miteinander festverbunden sind.

## Patentansprüche

1. Befeuchter (1) zum Befeuchten einer trockenen Kathoden-Zuluft (K-ZL) mittels einer feuchten Kathoden-Abluft (K-AL) in einem Brennstoffzellensystem,
- wobei der Befeuchter (1) ein Gehäuse (2) mit einem Gehäuseinnenraum (6) und einen in dem Gehäuseinnenraum (6) angeordneten Membranstapel (7) aufweist,
- wobei der Membranstapel (7) sechs Seitenflächen (12a, 12b, 13a, 13b, 14a, 14b) aufweist und in den Gehäuseinnenraum (6) des Gehäuses (2) in Längsrichtung (LR) einschiebbar ist,
- wobei zwei der einander gegenüberliegenden Seitenflächen (14a, 14b) des Membranstapels luftdicht verschlossen sind,
- wobei zwei weitere der einander gegenüberliegenden Seitenflächen (12a, 12b) des Membranstapels (7) in einem Zuluft-Strömungspfad (11a) von trockener Kathoden-Zuluft (K-ZL) und zwei weitere der einander gegenüberliegenden Seitenflächen (13a, 13b) des Membranstapels (7) in einem Abluft-Strömungspfad (11b) von feuchter Kathoden-Abluft (K-AL) vermischungsfrei durchströmbar sind, und
- wobei zwischen der jeweiligen durchströmbaren Seitenfläche (12a, 12b, 13a, 13b) des Membranstapels (7) und dem Gehäuse (2) jeweils eine Luftkammer (16a, 16b, 17a, 17b) zum Zuleiten oder Ableiten der Kathoden-Zuluft (K-ZL) in dem Zuluft-Strömungspfad (11a) oder zum Zuleiten oder Ableiten der Kathoden-Abluft (K-AL) in dem Abluft-Strömungspfad (11b) zu/aus dem Membranstapel (7) gebildet ist,
- wobei zwei der durchströmbaren Seitenflächen (12a, 12b) des Membranstapels (7) quer zur Längsrichtung (LR) ausgerichtet und in Längsrichtung (LR) durchströmbar sind und wobei zwei andere der durchströmbaren Seitenflächen (13a, 13b) des Membranstapels (7) parallel zur Längsrichtung (LR) ausgerichtet und quer zur Längsrichtung (LR) durchströmbar sind und wobei die nicht durchströmbaren Seitenflächen (14a, 14b) des Membranstapels (7) parallel zur Längsrichtung (LR) ausgerichtet sind,
- wobei der Befeuchter zwei einander gegenüberliegende Dichtplatten (15a, 15b) aufweist, wobei die Dichtplatten (15a, 15b) an den nicht durchströmbaren Seitenflächen (14a, 14b) des Membranstapels (7) anliegen,
**dadurch gekennzeichnet,**
- **dass** der Befeuchter (1) einen Tragrahmen (9) aufweist, wobei der Membranstapel (7) in den Tragrahmen (9) und der Tragrahmen (9) in das Gehäuse (2) eingesetzt sind,
- **dass** die durchströmbaren Seitenflächen (12a, 12b, 13a, 13b) des Membranstapels (7) durch den Tragrahmen (9) hindurch mit den zugeordneten Luftkammern (16a, 16b, 17a, 17b) luftleitend verbunden sind,
- **dass** der Membranstapel (7) zu dem Gehäuse (2) über den Tragrahmen (9) abgedichtet ist,
- **dass** die jeweiligen Dichtplatten (15a, 15b) an dem Tragrahmen (9) ausgeformt sind,
- **dass** die jeweilige Dichtplatte (15a, 15b) des Tragrahmens (9) mit der zugeordneten Seitenfläche (14a, 14b) des Membranstapels (7) stoffschlüssig und luftdicht verbunden ist und an dem Gehäuse (2) dichtend anliegt, so dass dadurch die Luftkammern (17a, 17b), die den beiden durchströmbaren und parallel zur Längsrichtung (LR) ausgerichteten Seitenflächen (13a, 13b) zugeordnet sind, quer zur die Längsrichtung (LR) umlaufenden Umlaufrichtung luftdicht voneinander getrennt sind,
- **dass** der Befeuchter (1) zwei elastische Ringdichtungen (10a, 10b) aufweist, wobei die jeweilige Ringdichtung (10a, 10b) die jeweilige durchströmbare und quer zur Längsrichtung (LR) angeordnete Seitenfläche (12a, 12b) des Membranstapels (7) randseitig umläuft, und
- **dass** die jeweilige Ringdichtung (10a, 10b) zwischen dem Gehäuse (2) und dem Tragrahmen (9) dichtend angeordnet ist und dadurch die dieser Seitenfläche (12a, 12b) zugeordnete Luftkammer (16a, 16b) von den benachbarten Luftkammern (17a, 17b) abdichtet.

2. Befeuchter nach Anspruch 1,
**dadurch gekennzeichnet,**
**dass** der Membranstapel (7) quaderförmig ist, wobei eine Längsachse des Membranstapels (7) und längste Kanten des Membranstapels (7) parallel zur Längsrichtung (LR) ausgerichtet sind.

3. Befeuchter nach Anspruch 1 oder 2,
**dadurch gekennzeichnet,**
- **dass** die durchströmbaren und quer zur Längsrichtung (LR) ausgerichteten Seitenflächen (12a, 12b) dem Zuluft-Strömungspfad (11a) zugeordnet sind, so dass der Zuluft-Strömungspfad (11a) in Längsrichtung (LR) ausgerichtet und von Kathoden-Zuluft (K-ZL) in Längsrichtung (LR) durchströmbar ist, und
- **dass** die durchströmbaren und parallel zur Längsrichtung (LR) ausgerichteten Seitenflächen (13a, 13b) dem Abluft-Strömungspfad (11b) zugeordnet sind, so dass der Abluft-Strömungspfad (11b) quer zur Längsrichtung (LR) ausgerichtet und von Kathoden-Abluft (K-AL) quer zur Längsrichtung (LR) durchströmbar ist.

4. Befeuchter nach einem der vorangehenden Ansprüche,
**dadurch gekennzeichnet,**
- **dass** der Membranstapel (7) mehrere flexible und sich bei einem auf sie wirkenden Druck verformbare Membrane aufweist und die jeweilige Dichtplatte (15a, 15b) derart ausgebildet ist, dass im Betrieb des Befeuchters (1) die jeweilige Dichtplatte (15a, 15b) durch den höheren als der Außendruck inneren Betriebsdruck (BD) in dem Membranstapel (7) verformbar und an das Gehäuse (2) dichtend anpressbar ist, und/oder
- **dass** der Membranstapel (7) mehrere flexible und sich bei einem auf sie wirkenden Druck verformbare Membrane aufweist und die jeweilige Dichtplatte (15a, 15b) verformbar ausgebildet ist, so dass beim Vorliegen des höheren als der Außendruck inneren Betriebsdrucks (BD) in dem Membranstapel (7) die jeweilige Dichtplatte (15a, 15b) an das Gehäuse (2) dichtend anpressbar ist.

5. Befeuchter nach einem der vorangehenden Ansprüche,
**dadurch gekennzeichnet,**
- **dass** auf der jeweiligen Dichtplatte (15a, 15b) wenigstens eine in Längsrichtung (LR) ausgerichtete Dichtrippe (19a, 19b) ausgebildet ist und die jeweilige Dichtrippe (19a, 19b) an dem Gehäuse (2) dichtend anliegt, so dass die Luftkammern (17a, 17b), die den beiden durchströmbaren und parallel zur Längsrichtung (LR) ausgerichteten Seitenflächen (13a, 13b) zugeordnet sind, quer zur Umlaufrichtung luftdicht voneinander getrennt sind.

6. Befeuchter nach Anspruch 5,
**dadurch gekennzeichnet,**
**dass** der Membranstapel (7) mehrere flexible und sich bei einem auf sie wirkenden Druck verformbare Membrane aufweist und die jeweilige Dichtplatte (15a, 15b) oder die jeweilige Dichtrippe (19a, 19b) auf der Dichtplatte (15a, 15b) derart ausgebildet ist, dass die jeweilige Dichtplatte (15a, 15b) im Betrieb des Befeuchters (1) durch den höheren als der Außendruck inneren Betriebsdruck (BD) in dem Membranstapel (7) verformbar ist und die jeweilige Dichtplatte (15a, 15b) oder die jeweilige Dichtrippe (19a, 19b) an das Gehäuse (2) dichtend anpressbar ist.

7. Befeuchter nach einem der vorangehenden Ansprüche,
**dadurch gekennzeichnet,**
- **dass** das Gehäuse (2) einen quer zur Längsrichtung (LR) beidseitig offenen Gehäusekörper (3) und zwei Schließdeckel (3a, 3b) aufweist, wobei der Gehäusekörper (3) mittels der Schließdeckel (3a, 3b) jeweils axial längsendseitig verschlossen ist, oder
- **dass** das Gehäuse (2) einen quer zur Längsrichtung (LR) einseitig offenen Gehäusekörper (3) und einen Schließdeckel (3a) aufweist, wobei der Gehäusekörper (3) mittels des Schließdeckels (3a) axial längsendseitig verschlossen ist.

8. Befeuchter nach Anspruch 7,
**dadurch gekennzeichnet,**
**dass** der Befeuchter (1) für den jeweiligen Schließdeckel (3a, 3b) eine elastische Umlaufdichtung (5a, 5b) aufweist, wobei die Umlaufdichtung (5a, 5b) zwischen dem Gehäusekörper (3) und dem jeweiligen Schließdeckel (3a, 3b) dichtend angeordnet ist.

9. Befeuchter nach Anspruch 1 und/oder 8,
**dadurch gekennzeichnet,**
**dass** die jeweilige Ringdichtung (10a, 10b) und/oder die jeweilige Umlaufdichtung (5a, 5b) aus einer gehärteten Klebstoffmasse gebildet sind.

## Claims

1. Humidifier (1) for humidifying a dry cathode supply air (K-ZL) by means of a humid cathode exhaust air (K-AL) in a fuel cell system,
- wherein the humidifier (1) has a housing (2) with a housing interior (6) and a membrane stack (7) arranged in the housing interior (6),
- wherein the membrane stack (7) has six side surfaces (12a, 12b, 13a, 13b, 14a, 14b) and can be inserted into the housing interior (6) of the housing (2) in the longitudinal direction (LR),
- wherein two of the opposing side surfaces (14a, 14b) of the membrane stack are hermetically sealed,
- wherein dry cathode supply air (K-ZL) can flow through two further of the opposing side surfaces (12a, 12b) of the membrane stack (7) in a supply air flow path (11a) and humid cathode exhaust air (K-AL) can flow through two further of the opposing side surfaces (13a, 13b) of the membrane stack (7) in an exhaust air flow path (11b) without mixing, and
- wherein an air chamber (16a, 16b, 17a, 17b) is formed between each of the side surfaces (12a, 12b, 13a, 13b) of the membrane stack (7) through which air can flow and the housing (2) for supplying or discharging the cathode supply air (K-ZL) in the supply air flow path (11a) or for supplying or discharging the cathode exhaust air (K-AL) in the exhaust air flow path (11b) to/from the membrane stack (7),
- wherein two of the side surfaces (12a, 12b) of the membrane stack (7) through which air can flow are aligned transversely to the longitudinal direction (LR) and air can flow therethrough in longitudinal direction (LR) and wherein two other of the side surfaces (13a, 13b) of the membrane stack (7) through which air can flow are aligned parallel to the longitudinal direction (LR) and air can flow therethrough transversely to the longitudinal direction (LR), and wherein the side surfaces (14a, 14b) of the membrane stack (7) through which air cannot flow are aligned parallel to the longitudinal direction (LR),
wherein the humidifier has two opposing sealing plates (15a, 15b), wherein the sealing plates (15a, 15b) bears against the side surfaces (14a, 14b) of the membrane stack (7) through which air cannot flow,
**characterised in that**
- the humidifier (1) has a support frame (9), wherein the membrane stack (7) is inserted into the support frame (9) and the support frame (9) is inserted into the housing (2),
- the side surfaces (12a, 12b, 13a, 13b) of the membrane stack (7) through which air can flow are connected through the supporting frame (9) to the associated air chambers (16a, 16b, 17a, 17b) in an air-guiding manner,
- the membrane stack (7) is sealed to the housing (2) via the support frame (9),
- the respective sealing plates (15a, 15b) are moulded on the support frame (9),
- the respective sealing plate (15a, 15b) of the support frame (9) is connected to the associated side surface (14a, 14b) of the membrane stack (7) in a material-locking and hermetic manner and bears against the housing (2) in a sealing manner, so that as a result the air chambers (17a, 17b), which are associated with the two side surfaces (13a, 13b) through which air can flow and which are aligned parallel to the longitudinal direction (LR), are hermetically separated from one another transversely to the direction of circulation around the longitudinal direction (LR),
- the humidifier (1) has two elastic annular seals (10a, 10b), wherein the respective annular seal (10a, 10b) runs around the edge of the respective side surface (12a, 12b) of the membrane stack (7) through which air can flow and which is arranged transversely to the longitudinal direction (LR), and
- the respective annular seal (10a, 10b) is arranged between the housing (2) and the support frame (9) in a sealing manner and thereby seals the air chamber (16a, 16b) associated with this side surface (12a, 12b) from the adjacent air chambers (17a, 17b).

2. Humidifier according to claim 1,
**characterised in that**
the membrane stack (7) is cuboidal, wherein a longitudinal axis of the membrane stack (7) and longest edges of the membrane stack (7) are aligned parallel to the longitudinal direction (LR).

3. Humidifier according to claim 1 or 2,
**characterised in that**
- that the side surfaces (12a, 12b) through which air can flow and which are aligned transversely to the longitudinal direction (LR) are associated with the supply air flow path (11a), so that the supply air flow path (11a) is aligned in longitudinal direction (LR) and cathode supply air (K-ZL) can flow therethrough in longitudinal direction (LR), and
- the side surfaces (13a, 13b) through which air can flow and which are aligned parallel to the longitudinal direction (LR) are associated with the exhaust air flow path (11b), so that the exhaust air flow path (11b) is aligned transversely to the longitudinal direction (LR) and cathode exhaust air (K-AL) can flow therethrough transversely to the longitudinal direction (LR).

4. Humidifier according to any one of the preceding claims,
**characterised in that**
- the membrane stack (7) has multiple flexible membranes which are deformable when a pressure acts on them, and the respective sealing plate (15a, 15b) is designed in such a way that, during operation of the humidifier (1), the respective sealing plate (15a, 15b) can be deformed by the internal operating pressure (BD) in the membrane stack (7), which is higher than the external pressure, and can be pressed against the housing (2) in a sealing manner, and/or
- the membrane stack (7) has multiple flexible membranes which are deformable when a pressure acts on them, and the respective sealing plate (15a, 15b) is designed to be deformable, so that when the internal operating pressure (BD) in the membrane stack (7) is higher than the external pressure, the respective sealing plate (15a, 15b) can be pressed against the housing (2) in a sealing manner.

5. Humidifier according to any one of the preceding claims,
**characterised in that**
- at least one sealing rib (19a, 19b) aligned in longitudinal direction (LR) is formed on the respective sealing plate (15a, 15b) and the respective sealing rib (19a, 19b) bears in a sealing manner against the housing (2), so that the air chambers (17a, 17b), which are associated with the two side surfaces (13a, 13b) through which air can flow and which are aligned parallel to the longitudinal direction (LR), are separated from one another in an airtight manner transversely to the direction of circulation.

6. Humidifier according to claim 5,
**characterised in that**
the membrane stack (7) has multiple flexible membranes which are deformable when a pressure acts on them, and the respective sealing plate (15a, 15b) or the respective sealing rib (19a, 19b) is formed on the sealing plate (15a, 15b) in such a way that the respective sealing plate (15a, 15b) can be deformed during operation of the humidifier (1) by the internal operating pressure (BD) in the membrane stack (7), which is higher than the external pressure, and the respective sealing plate (15a, 15b) or the respective sealing rib (19a, 19b) can be pressed against the housing (2) in a sealing manner.

7. Humidifier according to any one of the preceding claims,
**characterised in that**
- the housing (2) has a housing body (3) open on both sides transversely to the longitudinal direction (LR) and two closing covers (3a, 3b), wherein the housing body (3) is closed axially at the longitudinal end by means of the closing covers (3a, 3b), or
- the housing (2) has a housing body (3) open on one side transversely to the longitudinal direction (LR) and a closing cover (3a), wherein the housing body (3) is closed axially at the longitudinal end by means of the closing cover (3a).

8. Humidifier according to claim 7,
**characterised in that**
the humidifier (1) has an elastic rotary seal (5a, 5b) for the respective closing cover (3a, 3b), wherein the rotary seal (5a, 5b) is arranged in a sealing manner between the housing body (3) and the respective closing cover (3a, 3b).

9. Humidifier according to claim 1 and/or 8,
**characterised in that**
the respective annular seal (10a, 10b) and/or the respective rotary seal (5a, 5b) are formed from a hardened adhesive compound.

## Revendications

1. Humidificateur (1) pour humidifier un air alimenté cathodique sec (K-ZL) au moyen d'un air évacué cathodique humide (K-AL) dans un système de piles à combustible,
- dans lequel l'humidificateur (1) présente un boîtier (2) avec un espace intérieur de boîtier (6) et un empilement de membranes (7) disposé dans l'espace intérieur de boîtier (6),
- dans lequel l'empilement de membranes (7) présente six surfaces latérales (12a, 12b, 13a, 13b, 14a, 14b) et peut être introduit dans l'espace intérieur de boîtier (6) du boîtier (2) dans la direction longitudinale (LR),
- dans lequel deux des surfaces latérales opposées (14a, 14b) de l'empilement de membranes sont fermées hermétiquement,
- dans lequel deux autres des surfaces latérales opposées (12a, 12b) de l'empilement de membranes (7) peuvent être traversées sans mélange dans une voie d'écoulement d'air alimenté (11a) d'air alimenté cathodique sec (K-ZL) et deux autres des surfaces latérales opposées (13a, 13b) de l'empilement de membranes (7) peuvent être traversées sans mélange dans une voie d'écoulement d'air évacué (11b) d'air évacué cathodique humide (K-AL), et
- dans lequel une chambre à air (16a, 16b, 17a, 17b) est formée entre la surface latérale (12a, 12b, 13a, 13b) respective de l'empilement de membranes (7) pouvant être traversée et le boîtier (2) pour alimenter ou évacuer l'air alimenté cathodique (K-ZL) dans la voie d'écoulement d'air alimenté (11a) ou pour alimenter ou évacuer l'air alimenté cathodique (K-AL) dans la voie d'écoulement d'air évacué (11b) vers/depuis l'empilement de membranes (7),
- dans lequel deux des surfaces latérales (12a, 12b) de l'empilement de membranes (7) pouvant être traversées sont orientées transversalement à la direction longitudinale (LR) et peuvent être traversées dans la direction longitudinale (LR) et dans lequel deux autres des surfaces latérales (13a, 13b) de l'empilement de membranes (7) sont orientées parallèlement à la direction longitudinale (LR) et peuvent être traversées transversalement à la direction longitudinale (LR), et dans lequel les surfaces latérales (14a, 14b) de l'empilement de membranes (7) ne pouvant pas être traversées sont orientées parallèlement à la direction longitudinale (LR),
- dans lequel l'humidificateur présente deux plaques d'étanchéité (15a, 15b) opposées l'une à l'autre, dans lequel les plaques d'étanchéité (15a, 15b) reposent contre les surfaces latérales (14a, 14b) de l'empilement de membranes (7) ne pouvant pas être traversées,
**caractérisé en ce que**
- l'humidificateur (1) présente un cadre porteur (9), dans lequel l'empilement de membranes (7) est inséré dans le cadre porteur (9) et le cadre porteur (9) est inséré dans le boîtier (2),
- les surfaces latérales (12a, 12b, 13a, 13b) de l'empilement de membranes (7) pouvant être traversées sont connectées aux chambres à air (16a, 16b, 17a, 17b) associées à travers le cadre porteur (9) de manière à conduire l'air,
- l'empilement de membranes (7) est étanchéifié par rapport au boîtier (2) par l'intermédiaire du cadre porteur (9),
- les plaques d'étanchéité respectives (15a, 15b) sont formées sur le cadre porteur (9),
- la plaque d'étanchéité respective (15a, 15b) du cadre porteur (9) est connectée à la surface latérale associée (14a, 14b) de l'empilement de membranes (7) par accouplement de matière et de manière hermétique et repose hermétiquement contre le boîtier (2), de sorte que les chambres à air (17a, 17b), qui sont associées aux deux surfaces latérales (13a, 13b) pouvant être traversées et orientées parallèlement à la direction longitudinale (LR), soient séparées l'une de l'autre hermétiquement, transversalement à la direction de circulation autour de la direction longitudinale (LR),
- l'humidificateur (1) présente deux joints annulaires élastiques (10a, 10b), dans lequel le joint annulaire respectif (10a, 10b) court le long du bord de la surface latérale respective (12a, 12b) de l'empilement de membranes (7) pouvant être traversée et disposée transversalement à la direction longitudinale (LR), et
- le joint annulaire respectif (10a, 10b) est disposé de manière étanche entre le boîtier (2) et le cadre porteur (9) et étanchéifié ainsi la chambre à air (16a, 16b) associée à cette surface latérale (12a, 12b) par rapport aux chambres à air voisines (17a, 17b).

2. Humidificateur selon la revendication 1,
**caractérisé en ce que**
l'empilement de membranes (7) est parallélépipédique, dans lequel un axe longitudinal de l'empilement de membranes (7) et les bords les plus longs de l'empilement de membranes (7) sont orientés parallèlement à la direction longitudinale (LR).

3. Humidificateur selon la revendication 1 ou 2,
**caractérisé en ce que**
- les surfaces latérales (12a, 12b) pouvant être traversées et orientées transversalement à la direction longitudinale (LR) sont associées à la voie d'écoulement d'air alimenté (11a), de sorte que la voie d'écoulement d'air alimenté (11a) soit orientée dans la direction longitudinale (LR) et puisse être traversée par de l'air alimenté cathodique (K-ZL) dans la direction longitudinale (LR), et
- les surfaces latérales (13a, 13b) pouvant être traversées et orientées parallèlement à la direction longitudinale (LR) sont associées à la voie d'écoulement d'air évacué (11b), de sorte que la voie d'écoulement d'air évacué (11b) soit orientée transversalement à la direction longitudinale (LR) et puisse être traversée par de l'air évacué cathodique (K-AL) transversalement à la direction longitudinale (LR).

4. Humidificateur selon l'une quelconque des revendications précédentes,
**caractérisé en ce que**
- l'empilement de membranes (7) présente plusieurs membranes flexibles et déformables sous l'effet d'une pression agissant sur elles, et la plaque d'étanchéité respective (15a, 15b) est conçue de sorte que, pendant le fonctionnement de l'humidificateur (1), la plaque d'étanchéité respective (15a, 15b) puisse être déformée dans l'empilement de membranes (7) par la pression de service intérieure (BD) supérieure à la pression extérieure et puisse être pressée de manière étanche contre le boîtier (2), et/ou **en ce que**
- l'empilement de membranes (7) présente plusieurs membranes flexibles et déformables sous l'effet d'une pression agissant sur elles, et la plaque d'étanchéité respective (15a, 15b) est conçue de manière déformable, de sorte que lorsque la pression de service intérieure (BD) est supérieure à la pression extérieure dans l'empilement de membranes (7), la plaque d'étanchéité respective (15a, 15b) puisse être pressée de manière étanche contre le boîtier (2).

5. Humidificateur selon l'une quelconque des revendications précédentes,
**caractérisé en ce que**
- au moins une nervure d'étanchéité (19a, 19b) orientée dans la direction longitudinale (LR) est formée sur la plaque d'étanchéité respective (15a, 15b) et la nervure d'étanchéité respective (19a, 19b) repose de manière étanche contre le boîtier (2), de sorte que les chambres à air (17a, 17b), qui sont associées aux deux surfaces latérales (13a, 13b) pouvant être traversées et orientées parallèlement à la direction longitudinale (LR), soient séparées les unes des autres hermétiquement, transversalement à la direction de circulation.

6. Humidificateur selon la revendication 5,
**caractérisé en ce que**
l'empilement de membranes (7) présente plusieurs membranes flexibles et déformables sous l'effet d'une pression agissant sur elles, et la plaque d'étanchéité respective (15a, 15b) ou la nervure d'étanchéité respective (19a, 19b) sur la plaque d'étanchéité (15a, 15b) est conçue de sorte que la plaque d'étanchéité respective (15a, 15b) soit déformable dans l'empilement de membranes (7) pendant le fonctionnement de l'humidificateur (1) sous l'effet de la pression de service intérieure (BD) supérieure à la pression extérieure, et que la plaque d'étanchéité respective (15a, 15b) ou que la nervure d'étanchéité respective (19a, 19b) puisse être pressée de manière étanche contre le boîtier (2).

7. Humidificateur selon l'une quelconque des revendications précédentes,
**caractérisé en ce que**
- le boîtier (2) présente un corps de boîtier (3) ouvert des deux côtés transversalement à la direction longitudinale (LR) et deux couvercles de fermeture (3a, 3b), dans lequel le corps de boîtier (3) est fermé axialement respectivement du côté de l'extrémité longitudinale au moyen des couvercles de fermeture (3a, 3b) ou
- le boîtier (2) présente un corps de boîtier (3) ouvert d'un côté transversalement à la direction longitudinale (LR) et un couvercle de fermeture (3a), dans lequel le corps de boîtier (3) est fermé axialement du côté de l'extrémité longitudinale au moyen du couvercle de fermeture (3a).

8. Humidificateur selon la revendication 7,
**caractérisé en ce que**
l'humidificateur (1) présente pour le couvercle de fermeture respectif (3a, 3b) un joint périphérique élastique (5a, 5b), dans lequel le joint périphérique (5a, 5b) est disposé de manière étanche entre le corps de boîtier (3) et le couvercle de fermeture respectif (3a, 3b).

9. Humidificateur selon la revendication 1 et/ou 8,
**caractérisé en ce que**
le joint annulaire respectif (10a, 10b) et/ou le joint périphérique respectif (5a, 5b) sont formés d'une masse adhésive durcie.
